# FASCICULE DE BREVET EUROPEEN

(11) **EP 3 624 241 B1**
(45) Date de publication et mention de la délivrance du brevet: **14.07.2021**
(21) Numéro de dépôt: 19195407.2
(22) Date de dépôt: 04.09.2019
(51) Int. Cl.: H01M 8/0202

(54) **PROCÉDÉ DE FABRICATION D'UN GUIDE D'ÉCOULEMENT DE RÉACTEUR ÉLECTROCHIMIQUE**
HERSTELLUNGSVERFAHREN EINER ABLAUFFÜHRUNG EINES ELEKTROCHEMISCHEN REAKTORS
METHOD OF MANUFACTURING AN ELECTROCHEMICAL REACTOR FLOW GUIDE

(30) Priorité: 12.09.2018 FR 1871024
(43) Date de publication de la demande: 18.03.2020
(73) Titulaire: Commissariat à l'Énergie Atomique et aux Énergies Alternatives, 75015 Paris (FR)
(72) Inventeur: SALOMON, Jérémie, 38054 GRENOBLE Cedex 9 (FR); AMESTOY, Benjamin, 38054 GRENOBLE Cedex 9 (FR); BLACHOT, Jean-François, 38054 GRENOBLE Cedex 9 (FR); TREMBLAY, Denis, 38054 GRENOBLE Cedex 9 (FR)
(74) Mandataire: Guérin, Jean-Philippe

(56) Documents cités:
- CN-A- 107 394 228
- US-A1- 2003 198 860
- US-A1- 2018 190 998

## Description

L'invention concerne les réacteurs électrochimiques à assemblages membrane-électrodes, tels que les piles à combustibles à membrane échangeuse de protons. L'invention concerne en particulier l'optimisation du procédé de fabrication de composants d'une pile à combustible et la réduction du poids de ces composants.

Les piles à combustible sont par exemple envisagées comme système d'alimentation électrique pour des véhicules automobiles produits à grande échelle dans le futur, ainsi que pour un grand nombre d'applications. Une pile à combustible est un dispositif électrochimique qui convertit de l'énergie chimique directement en énergie électrique. Un combustible tel que du dihydrogène ou du méthanol est utilisé comme carburant de la pile à combustible.

Dans le cas du dihydrogène, celui-ci est oxydé et ionisé sur une électrode de la pile et un comburant est réduit sur une autre électrode de la pile. La réaction chimique produit de l'eau au niveau de la cathode, de l'oxygène étant réduit et réagissant avec les protons. Le grand avantage de la pile à combustible est d'éviter des rejets de composés polluants atmosphériques sur le lieu de génération d'électricité.

Les piles à combustible à membrane d'échange de protons, dites PEM, fonctionnent à basse température, typiquement inférieure à 250°C et présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, le dihydrogène est ionisé pour produire des protons traversant la membrane. Les électrons produits par cette réaction migrent vers une plaque anodique, conductrice électronique, puis traversent un circuit électrique externe à la cellule pour former un courant électrique. Au niveau de la cathode, de l'oxygène est réduit et réagit avec les protons pour former de l'eau et fermer le circuit électrique avec l'autre plaque dite cathodique.

Chaque électrode doit être alimentée en réactifs en continu et de manière le plus homogène possible. Pour cela, des canaux d'écoulement sont classiquement présents sur les plaques anodique et cathodique. De plus des matériaux poreux conducteurs électroniques sont usuellement placés entre les canaux d'écoulement des plaques et chacune des électrodes pour réaliser une couche de diffusion des gaz appelée aussi GDL réalisée typiquement par un réseau de fibres de carbone.

Afin d'accroître la tension générée par la pile à combustible, celle-ci inclut généralement plusieurs cellules électrochimiques empilées et connectées électriquement en série. La pile à combustible peut alors comprendre plusieurs plaques munies de canaux d'écoulement, par exemple en métal, empilées les unes sur les autres. La membrane est disposée entre au moins une plaque anodique et au moins une plaque cathodique. Les plaques d'écoulement peuvent comprendre des canaux et orifices d'écoulement pour guider les réactifs et les produits vers/depuis la membrane, pour guider du liquide de refroidissement en fonction de la puissance de la pile à combustible, et pour séparer différents compartiments.

Les plaques munies de canaux d'écoulement alimentent en continu les surfaces réactives des électrodes en réactifs, au fur et à mesure de leur consommation. Les plaques comportent des réseaux de canaux d'écoulement assurant la distribution des réactifs dans les zones réactives. Les réseaux de canaux d'écoulement sont connectés entre des collecteurs d'entrée et de sortie, traversant généralement l'empilement de part en part. Chaque collecteur est entouré par un joint pour éviter le mélange des différents fluides circulant dans la pile.

Les plaques sont également électriquement conductrices pour former des collecteurs des électrons générés au niveau de l'anode. Les plaques ont également une fonction mécanique de transmission des efforts de serrage de l'empilement, nécessaire à la qualité du contact électrique, et une fonction de maintien mécanique du cœur électrochimique. Une conduction électronique est réalisée à travers les plaques, une conduction ionique étant obtenue à travers la membrane.

Selon un premier type de conception connue, une plaque munie de canaux d'écoulement peut être réalisée par usinage d'un bloc massif afin de définir ces canaux d'écoulement. Le bloc usiné est généralement en graphite.

Selon un second type de conception connue, un ensemble de plaques est formé de deux tôles métalliques assemblées par soudage et ménageant généralement entre elles des canaux d'écoulement d'un liquide de refroidissement. La forme des canaux d'écoulement est alors définie par formage ou déformation des tôles, par exemple par emboutissage des tôles métalliques. Une telle conception est en général favorisée pour réduire le coût et l'encombrement des plaques tout en conservant de bonnes performances.

Les tôles utilisées présentent généralement une épaisseur comprise entre 0.1 et 4mm, selon que les canaux sont emboutis ou usinés. Les canaux d'écoulement réalisés par emboutissage d'une tôle d'épaisseur typique de 0.1 mm présentent usuellement une largeur comprise entre 0,4 et 2mm, pour une profondeur comprise entre 0,2 et 0,4mm.

La conception et la réalisation des tôles de plaques anodique et cathodique s'avèrent à la fois complexes et relativement coûteuses. Cela impacte fortement le prix de revient de la pile à combustible, dont l'ensemble de plaques constitue un des principaux coûts. De plus, les opérations d'emboutissage induisent des pertes de planéité, qui rendent le dépôt de joint d'étanchéité compliqué. Par ailleurs, l'ensemble de plaques ainsi obtenu s'avère relativement lourd et encombrant, ce qui est notamment gênant pour des applications embarquées de la pile à combustible. En outre, les tôles fines utilisées restent suffisamment souples pour permettre la réalisation d'assemblages de formes globalement non planes.

Afin de se libérer des contraintes induites par le procédé d'emboutissage, le document CN107394228 propose de déposer une ou plusieurs couches d'une encre incluant du carbone sur une tôle métallique plane, de façon à former des nervures, des canaux d'écoulement étant délimités entre ces nervures.

Un tel procédé de fabrication s'avère relativement long et complexe à mettre en œuvre, la sérigraphie d'une couche d'encre nécessitant que la couche d'encre déposée en-dessous soit déjà solidifiée. Un tel procédé nécessite notamment plusieurs passes dès que le rapport entre la hauteur et la largeur d'une nervure dépasse 0,5. Aucune solution satisfaisante n'est décrite pour réaliser un dépôt épais d'une unique couche. Par ailleurs, le contrôle géométrique des nervures au séchage est relativement réduit. En outre, de telles nervures peuvent présenter une conductivité et une tenue mécanique insuffisantes.

Par ailleurs, le document US2018/190998 décrit un procédé de fabrication d'un guide d'écoulement d'un réacteur électrochimique, comprenant les étapes de :
- fournir un substrat;
- sur une première face du substrat, imprimer une couche d'encre conductrice électriquement en appliquant une contrainte de cisaillement sur cette couche, la couche d'encre étant imprimée pour former un motif incluant des nervures délimitant des canaux d'écoulement. Les encres utilisées nécessitent la superposition de plusieurs couches pour des épaisseurs de nervure importantes.

Le document US2003/198860 décrit l'application d'une électrode sous forme de pâte ayant un comportement non Newtonien sur une membrane ou sur une couche de diffusion gazeuse de support. La problématique est ici d'appliquer la pâte avec la bonne viscosité avec une buse, de façon à ne pas avoir un écoulement trop fluide au niveau de cette buse, et de façon à conserver une bonne répartition de la pâte sur le support.

L'invention vise à résoudre un ou plusieurs de ces inconvénients. L'invention porte ainsi sur un procédé de fabrication d'un guide d'écoulement d'un réacteur électrochimique, comprenant les étapes de :
- fournir un substrat ;
- sur une première face du substrat, imprimer une couche d'encre conductrice électriquement en appliquant une contrainte de cisaillement sur cette couche, la viscosité de l'encre imprimée étant comprise entre 70 et 500 Pa.s pour un vitesse de cisaillement (ou gradient de cisaillement) de 0,1 s⁻¹, et la viscosité de l'encre imprimée étant comprise entre 2,5 et 7 Pa.s pour une vitesse de cisaillement de 100 s⁻¹, la couche d'encre étant imprimée pour former un motif incluant des nervures délimitant des canaux d'écoulement.

Sauf indication contraire, les grandeurs de viscosité et de vitesse de cisaillement correspondront à une température de 20°C.

L'invention porte également sur les variantes suivantes. L'homme du métier comprendra que chacune des caractéristiques des variantes suivantes peut être combinée indépendamment aux caractéristiques ci-dessus, sans pour autant constituer une généralisation intermédiaire.

Selon une variante, l'étape d'impression de la couche d'encre sur la première face du substrat est réalisée par sérigraphie.

Selon encore une variante, ladite étape d'impression par sérigraphie comprend le dépôt de l'encre sur un écran de type pochoir et l'application d'une racle sur l'écran de façon à appliquer un cisaillement sur l'encre pour l'imprimer sur la première face du substrat.

Selon une autre variante, le procédé comprend en outre une étape de séchage pour solidifier la couche d'encre du motif formé.

Selon encore une variante, ladite étape d'impression de la couche d'encre comprend l'application d'une contrainte de cisaillement sur cette couche avec une vitesse de cisaillement compris entre 10 s⁻¹ et 80 s⁻¹.

Selon encore une autre variante, ladite couche d'encre imprimée présente une épaisseur au moins égale à 150 µm.

Selon une variante, les nervures formées présentent une hauteur au moins égale à la moitié de leur largeur.

Selon une autre variante, ladite encre imprimée inclut des particules de graphite selon une proportion comprise entre 90 et 99% de l'extrait sec.

Selon encore une variante, l'extrait sec représente entre 50 et 75 % en poids de l'encre sur laquelle le cisaillement est appliqué.

Selon une variante, ladite encre inclut des particules ayant un diamètre compris entre 1 et 6µm D50 à une proportion comprise entre 1 et 35 % en poids de l'extrait sec de mélange de graphite, ladite encre incluant en outre des particules ayant un diamètre compris entre 10 et 25 µm D50 à une proportion d'au moins 25 % en poids de l'extrait sec de mélange de graphite.

Selon encore une autre variante, ladite encre sur laquelle le cisaillement est appliqué inclut un liant polymère.

Selon une variante, ladite encre sur laquelle le cisaillement est appliqué inclut du polyfluorure de vinylidène.

Selon encore une variante, l'encre sur laquelle le cisaillement est appliqué présente un module de conservation supérieur au module visqueux pour une amplitude de déformation de 1% à une fréquence inférieure à 0,1Hz,

Selon une autre variante, l'encre sur laquelle le cisaillement est appliqué présente un module de conservation inférieur au module visqueux pour une amplitude de déformation de 1% à une fréquence supérieure à 2Hz.

Selon encore une autre variante, ledit substrat fourni est exempt de relief au niveau de l'encre imprimée.

Selon une variante, ledit substrat fourni est une plaque conductrice électriquement, une couche de diffusion gazeuse ou une couche d'électrode.

L'invention porte également sur un procédé de fabrication d'une plaque bipolaire, comprenant la fabrication de premier à troisième guides d'écoulement par un procédé de fabrication tel que défini précédemment, ledit substrat fourni étant une plaque conductrice électriquement pour chacun des premier à troisième guides d'écoulement, une couche d'encre conductrice électriquement étant imprimée seulement sur la première face des premier à troisièmes guides d'écoulement, une plaque bipolaire étant formée en accolant des deuxièmes faces des premier et deuxièmes guides d'écoulement et en accolant les nervures du motif formé sur le deuxième guide d'écoulement contre une deuxième face du troisième guide d'écoulement, de façon à délimiter des canaux d'écoulement entre les deuxième et troisième guides d'écoulement.

Selon une variante, ledit substrat fourni est une plaque conductrice électriquement, et on imprime une couche d'encre conductrice électriquement en appliquant un cisaillement de cette couche sur une deuxième face de ladite plaque conductrice, la viscosité de l'encre imprimée étant comprise entre 70 et 500 Pa.s pour une vitesse de cisaillement de 0,1 s⁻¹, et la viscosité de l'encre imprimée étant comprise entre 2,5 et 7 Pa.s pour une vitesse de cisaillement de 100 s⁻¹, la couche d'encre étant imprimée pour former un motif incluant des nervures délimitant des canaux d'écoulement.

Dans un procédé de fabrication d'une plaque bipolaire, un guide d'écoulement peut être réalisé par un procédé de fabrication tel que défini ci-dessus, et comprenant l'application d'une face d'une autre plaque conductrice électriquement contre des nervures d'un motif formées sur le support du guide d'écoulement.

L'invention porte encore sur un procédé de fabrication d'une pile à combustible, comprenant :
- la formation d'un premier guide d'écoulement par un procédé de fabrication tel que défini précédemment, dans lequel le substrat du premier guide est une première plaque conductrice électriquement ;
- la formation d'un deuxième guide d'écoulement par un procédé de fabrication tel que défini précédemment, dans lequel le substrat du deuxième guide est une deuxième plaque conductrice électriquement ;
- le placement d'un assemblage membrane/électrodes entre lesdites première et deuxième plaques, les nervures respectives des motifs formés sur les première et deuxième plaques d'écoulement étant orientées vers l'assemblage membrane/électrodes.

Selon une variante, chacune desdites nervures des motifs formés est constituée d'une unique couche d'encre imprimée.

Selon encore une variante, la plaque est fabriquée par un procédé selon l'une quelconque des revendications précédentes.

D'autres caractéristiques et avantages de l'invention ressortiront clairement de la description qui en est faite ci-après, à titre indicatif et nullement limitatif, en référence aux dessins annexés, dans lesquels :
[Fig.1] est une représentation schématique en perspective éclatée d'un exemple de pile à combustible ;
[Fig.2] est une vue de dessus d'un exemple de plaque de guidage d'écoulement ;
[Fig.3] est une représentation schématique en coupe de côté d'une étape d'impression par sérigraphie pour la formation d'une plaque de guidage selon l'invention ;
[Fig.4] est une vue en coupe schématique d'un exemple de configuration d'une plaque de guidage selon un premier mode de réalisation ;
[Fig.5] est une vue en coupe schématique d'un autre exemple de configuration d'une plaque de guidage ;
[Fig.6] est une vue en coupe schématique d'un autre exemple de configuration d'une plaque de guidage pour deux flux adjacents croisés ;
[Fig.7] est une vue en coupe schématique d'un exemple d'association de plaques de guidage pour former une plaque bipolaire ;
[Fig.8] est une vue en coupe schématique d'un autre exemple d'association de plaques de guidage pour former une plaque bipolaire ;
[Fig.9] est un diagramme illustrant le comportement rhéologique rhéofluidifiant d'un exemple d'encre utilisable pour la mise en œuvre d'un procédé selon l'invention ;
[Fig.10] est un diagramme illustrant un autre exemple d'un comportement rhéologique avantageux d'une encre pour la mise en œuvre d'un procédé selon l'invention ;
[Fig.11] illustre de façon comparative des courbes de polarisation d'une pile à combustible incluant des plaques de guidage d'écoulement selon l'invention et une pile à combustible incluant des plaques de guidage d'écoulement selon l'état de la technique ;
[Fig.12] illustre un exemple de profil de nervures et de canaux d'écoulement réalisés par un procédé de fabrication selon l'invention ;
[Fig.13] illustre une vue en coupe schématique d'un exemple de configuration d'une plaque de guidage selon un deuxième mode de réalisation ;
[Fig.14] illustre l'association de la plaque de guidage de la figure 13 avec d'autres composants ;
[Fig.15] illustre une vue en coupe schématique d'un exemple de configuration d'une plaque de guidage selon un troisième mode de réalisation ;
[Fig.16] illustre l'association de la plaque de guidage de la figure 15 avec d'autres composants.

On comprendra que l'utilisation des termes d'orientation ou de positionnement 'centre', 'haut', 'bas', 'avant', 'arrière', 'gauche', 'droite', 'vertical', 'horizontal', 'sommet', 'fond', 'intérieur' ou 'extérieur' est basée sur celle qui peut ressortir des dessins annexés. Ces termes sont utilisés pour faciliter la compréhension du descriptif de l'invention, plutôt que pour induire qu'un élément décrit avec une orientation ou une position particulière doit nécessairement être réalisé ou mis en œuvre avec cette orientation ou position spécifique.

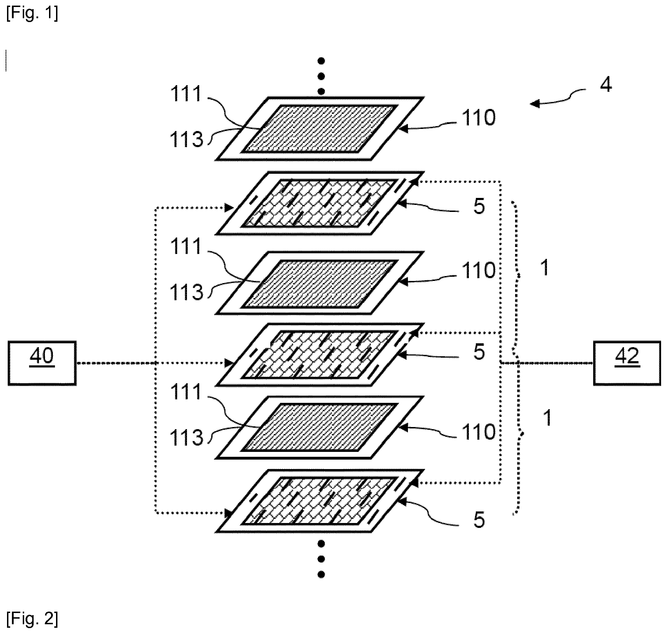

La figure 1 est une vue en perspective éclatée schématique d'un empilement de cellules 1 d'une pile à combustible 4. La pile à combustible 4 comprend plusieurs cellules 1 superposées. Les cellules 1 sont du type à membrane échangeuse de protons ou membrane à électrolyte polymère. L'invention sera ici détaillée pour la fabrication d'un guide d'écoulement des réactifs, des produits ou des caloporteurs pour une pile à combustible mais pourra également être utilisée pour la fabrication de guides d'écoulement pour d'autres types de réacteurs électrochimiques, par exemple un électrolyseur.

La pile à combustible 4 comprend une source de carburant 40. La source de carburant 40 alimente ici en dihydrogène une entrée de chaque cellule 1. La pile à combustible 4 comprend également une source de comburant 42. La source de comburant 42 alimente ici en air une entrée de chaque cellule 1, l'oxygène de l'air étant utilisé comme oxydant. Chaque cellule 1 comprend également des canaux d'échappement. Une ou plusieurs cellules 1 présentent également un circuit de refroidissement de la zone réactive.

Chaque cellule 1 comprend un assemblage membrane/électrodes 110 ou AME 110. Un assemblage membrane/électrodes 110 comprend un électrolyte solide 113, une cathode (non illustrée) et une anode 111 placées de part et d'autre de l'électrolyte et fixées sur cet électrolyte 113. La couche d'électrolyte 113 forme une membrane semi-perméable permettant une conduction protonique tout en étant imperméable aux gaz présents dans la cellule. La couche d'électrolyte empêche également un passage des électrons entre l'anode 111 et la cathode. L'électrolyte 113 est par exemple en polybenzimidazole (PBI) dopé avec de l'acide phosphorique ou en ionomère conducteur protonique.

Entre chaque couple d'AME adjacents, un ensemble de plaques anodique et cathodique 5 est disposé. Dans l'exemple illustré pour ce mode de réalisation, sur chaque face d'une AME, un ensemble de plaques munies de canaux 5 forme un guide d'écoulement de réactif. Chaque ensemble de plaques 5 définit ici des canaux d'écoulement anodiques et des canaux d'écoulement cathodiques sur des faces externes opposées. Des ensembles de plaques d'écoulement 5 définissent également avantageusement des canaux d'écoulement de fluide de refroidissement entre deux assemblages membrane/électrodes successifs. Les ensembles de plaques 5 peuvent être formés chacun de façon connue en soi à partir de deux tôles métalliques conductrices assemblées, par exemple en acier inoxydable, en alliage de titane, en alliage d'aluminium, en alliage de nickel ou en alliage de tantale. Chaque tôle définit alors une face externe respective. Les ensembles de plaques 5 peuvent également être obtenus par tout autre procédé, par exemple le moulage ou l'injection à partir de composites carbone-polymère. Les ensembles de plaques 5 peuvent ainsi également être formés d'un seul tenant. Les faces externes de l'ensemble de plaques 5 sont alors définies par une telle pièce d'un seul tenant. Chaque assemblage membrane/électrodes 110 peut en outre comprendre une couche de diffusion de gaz (non illustrée) disposée entre l'anode et des canaux d'écoulement de carburant, et une autre couche de diffusion de gaz disposée entre la cathode et d'autres canaux d'écoulement de comburant. Les assemblages membrane/électrodes 110 peuvent comporter des renforts, non illustrés ici. Dans ce mode de réalisation, les canaux envisagés sont réalisés sur les plaques.

De façon connue en soi, durant le fonctionnement de la pile à combustible 4, de l'air s'écoule entre un AME 110 et un ensemble de plaques 5, et du dihydrogène s'écoule entre cet AME 110 et un autre ensemble de plaques 5. Les ensembles de plaques 5 ont notamment une fonction de guidage d'écoulement des réactifs de part et d'autre de l'AME 110. Au niveau de l'anode, le dihydrogène est ionisé pour produire des protons qui traversent l'AME 110. Les électrons produits par cette réaction sont collectés par un ensemble de plaques 5. Les électrons produits sont ensuite transférés sur une charge électrique connectée à la pile à combustible 4 pour former un courant électrique. Au niveau de la cathode, de l'oxygène est réduit et réagit avec les protons pour former de l'eau.

Durant son fonctionnement, une cellule 1 de la pile à combustible 4 génère usuellement une tension continue entre l'anode et la cathode entre 0.5 et 1V, selon les conditions de débit de gaz.

La source de comburant 42 comprend typiquement un compresseur pour introduire l'air à une pression donnée à l'entrée des cellules 1. Un tel compresseur reçoit par exemple une consigne de pression d'air, la pression d'air pouvant être régulée par une vitesse de rotation variable du compresseur.

L'empilement des ensembles de plaques 5 et des assemblages membrane/électrodes 110 est destiné à former une pluralité de collecteurs d'écoulement. À cet effet, des orifices respectifs sont ménagés à travers les ensembles plaques 5 et à travers les assemblages membrane/électrodes 110. Les orifices des ensembles de plaques 5 et des assemblages membrane/électrodes 110 sont disposés en vis-à-vis afin de former les différents collecteurs d'écoulement.

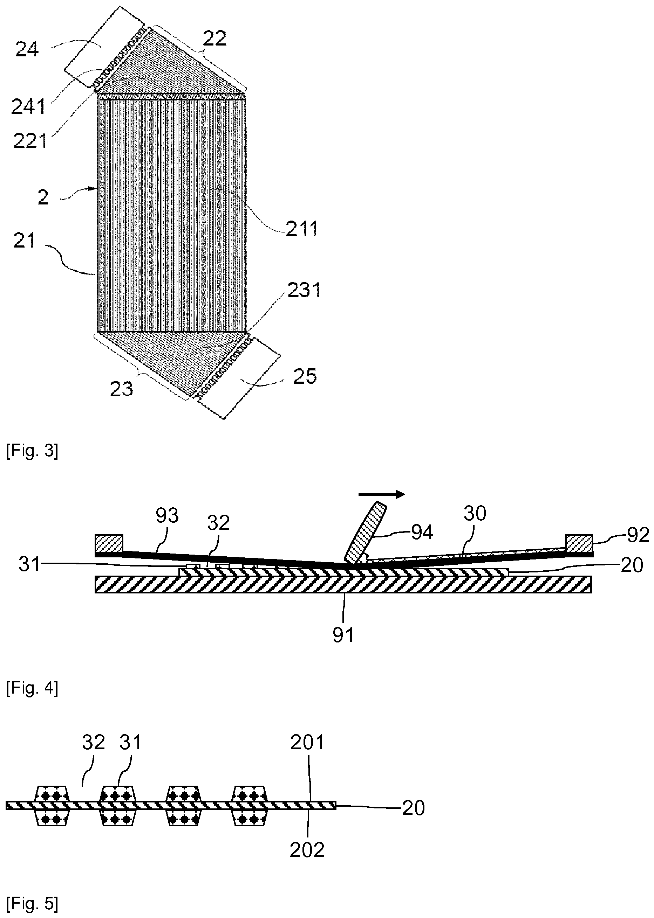

La figure 2 est une vue de dessus d'un exemple de plaque de guidage d'écoulement 2. La figure 2 illustre une face de la plaque de guidage 2, destinée à guider un réactif dans une zone réactive positionnée dans sa partie médiane. La plaque de guidage 2 comporte ainsi une zone réactive 21 dans sa partie médiane, comportant des canaux d'écoulement 211. La plaque de guidage 2 comporte également un collecteur d'entrée 24 du réactif et un collecteur de sortie 25 du réactif, positionnés de part et d'autre de la zone réactive 21. Une zone d'homogénéisation 22 est ménagée entre la zone réactive 21 et le collecteur d'entrée 24. La zone d'homogénéisation 22 comprend ici des canaux d'homogénéisation 221. Une zone de liaison 241, incluant par exemple des injecteurs, est ménagée entre le collecteur d'entrée 24 et la zone d'homogénéisation 22. Une zone d'homogénéisation 23 est ménagée entre la zone réactive 21 et le collecteur de sortie 25. La zone d'homogénéisation 23 comprend ici des canaux d'homogénéisation 231. Une zone de liaison, incluant par exemple des injecteurs, est ménagée entre le collecteur de sortie 25 et la zone d'homogénéisation 23.

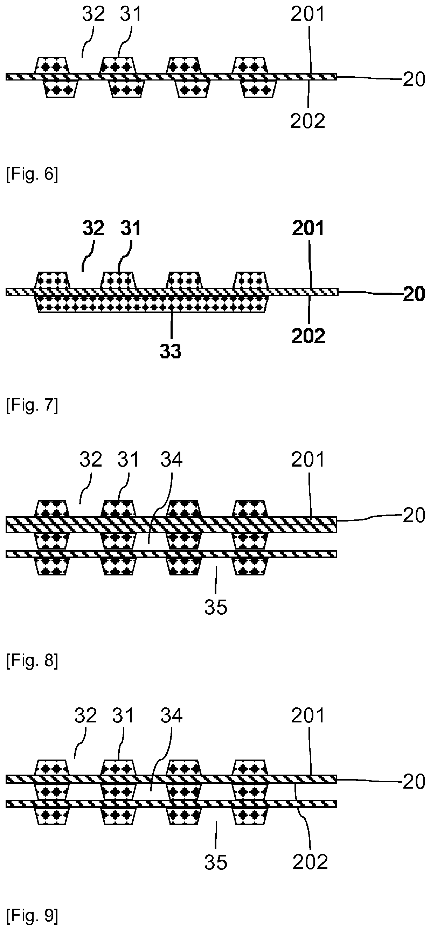

Un exemple de procédé de fabrication d'une plaque de guidage 2 va maintenant être détaillé, en référence à la figure 3. De façon générale, le procédé de fabrication d'une plaque de guidage d'écoulement 2 pour un réacteur électrochimique comprend les étapes suivantes :
- fournir un substrat (par exemple une plaque conductrice électriquement, une couche de diffusion gazeuse ou une couche d'électrode) ;
- sur une première face de ce substrat, imprimer une couche d'encre ou de pâte conductrice électriquement, en lui appliquant une vitesse de cisaillement suffisante (par exemple une vitesse de cisaillement comprise entre 10 s⁻¹ et 80 s⁻¹). La viscosité de l'encre sur laquelle le cisaillement est appliqué est comprise entre 70 et 500 Pa.s pour une vitesse de cisaillement de 0,1 s⁻¹, et la viscosité de cette encre imprimée est comprise entre 2,5 et 7 Pa.s pour une vitesse de cisaillement de 100 s⁻¹. La figure 9 est un diagramme illustrant le comportement rhéologique d'un exemple d'encre utilisable pour une impression dans un procédé de fabrication selon l'invention. L'abscisse représente la vitesse de cisaillement appliquée à l'encre, l'ordonnée représente la viscosité de l'encre. Lors de l'impression de la couche d'encre, une contrainte de cisaillement lui est avantageusement appliquée avec une vitesse de cisaillement comprise entre 10 s⁻¹ et 80 s⁻¹. Le diagramme a été tracé à partir d'un rhéomètre commercialisé sous la référence CVO par la société Malverne. L'encre déposée présente globalement des propriétés rhéofluidifiantes, c'est-à-dire que sa viscosité baisse lorsque la vitesse de cisaillement qui lui est appliqué augmente. La couche d'encre est imprimée selon un motif incluant des nervures et délimitant des canaux d'écoulement. Les nervures peuvent être continues ou discontinues.

De telles propriétés de l'encre sont adaptées pour obtenir le comportement suivant durant la mise en œuvre du procédé :
- une encre figée si le cisaillement appliqué reste inférieur au seuil d'écoulement lors de son dépôt préalable à l'impression ;
- une encre fluide lors de l'application d'un cisaillement, permettant son écoulement à travers un écran pour son transfert selon un motif sur le support ;
- une encre présentant à nouveau un état figé si le cisaillement appliqué redevient inférieur à un seuil d'écoulement après le transfert sur la plaque.

Un tel procédé de fabrication permet de réaliser des nervures relativement hautes en une seule étape d'impression, avec un bon contrôle sur leur géométrie finale. Un tel procédé de fabrication permet par exemple de réaliser des nervures délimitant la hauteur finale des canaux d'écoulement en une unique étape d'impression. En pratique, une encre comportant de telles propriétés rhéofluidifiantes permet de rendre cette encre très fluide lors de l'application du cisaillement pour bien épouser la face de la plaque conductrice et suivre le motif d'impression souhaité, puis de retrouver cette encre très visqueuse après un arrêt de l'application du cisaillement pour conserver un bon contrôle géométrique des nervures formées lors de l'impression. On limite notamment les risques de phénomènes de fluage avant durcissement des nervures formées.

La figure 3 illustre un cas particulier d'impression d'une couche d'encre conductrice par un procédé de sérigraphie. Le procédé est ici illustré dans son application à l'exemple d'une plaque conductrice mais pourrait également s'appliquer à une couche de diffusion gazeuse ou à une électrode. La figure 3 est une représentation schématique en coupe de côté d'une étape d'impression par sérigraphie pour la formation d'une plaque de guidage selon un mode de réalisation de l'invention. Une impression par sérigraphie s'avère avantageuse car permettant une cadence de production élevée, avec par exemple une vitesse de sérigraphie comprise entre 15 et 25 mètres/minute pour une technique de sérigraphie par rotation.

Une plaque conductrice électriquement 20 est ici positionnée et maintenue en position sur un support 91, tel qu'un plateau de convoyage. Un cadre 92 est positionné au-dessus de la plaque 20. Un masque 93 et fixé au cadre 92 et s'étend au niveau d'une ouverture médiane du cadre 92. Le masque 93 est disposé à la verticale de la plaque 20 au niveau de cette ouverture médiane du cadre 92. Le masque 93 peut présenter une structure connue en soi pour mettre en œuvre une étape de sérigraphie. Le masque 93 peut par exemple se présenter sous la forme d'un écran maillé (désigné par mesh en langue anglaise) ou se présenter sous la forme d'un écran pochoir (désigné par stencil en langue anglaise). Un écran de type pochoir pourra être favorisé pour le dépôt d'une plus grande quantité ou une plus grande épaisseur d'encre 30. Une couche d'encre 30 présentant les propriétés rhéofluidifiantes détaillées précédemment est déposée sur le masque 93, à la verticale de la plaque 20. La couche d'encre 30 déposée est alors dans un état très visqueux et figé. Une racle 94 est alors plaquée sur l'encre 30 jusqu'à amener le masque 93 en contact avec la plaque 20. La racle 94 parcourt alors la surface de la plaque 20, pour appliquer une contrainte de cisaillement sur l'encre 30. La vitesse de cisaillement appliquée par la racle 94 sur l'encre 30 peut par exemple atteindre 50 s⁻¹. L'application du cisaillement sur l'encre 30 la fluidifie, ce qui lui permet de traverser le motif du masque 93 en épousant la forme de celui-ci, pour être transférée sur la plaque 20. Après le passage de la racle 94, la contrainte de cisaillement sur l'encre cesse, de sorte que l'encre transférée sur la plaque 20 devient à nouveau très visqueuse et figée, pour conserver le motif formé par le masque 93. L'encre transférée sur la plaque 20 forme un motif incluant des nervures 31, délimitant des canaux d'écoulement 32 entre elles. Les nervures 31 présentent notamment des faces latérales s'étendant selon une dimension de la plaque 20, pour former des canaux d'écoulement 32. Les nervures 31 formées peuvent être continues ou discontinues, de même dimension ou non tout le long de l'écoulement.

Après l'étape d'application de la racle 94, après avoir transféré l'encre 30 pour former les nervures 31 sur la plaque 20, une étape de séchage de l'encre est avantageusement mise en œuvre, pour éliminer du solvant présent dans l'encre 30. Le séchage peut être mis en œuvre par évaporation naturelle ou accéléré par une irradiation artificielle. Un séchage accéléré peut favoriser un meilleur contrôle géométrique des nervures 31 formées. Un séchage accéléré peut par exemple être réalisé dans un four continu ou dans une étuve statique. Le séchage peut être réalisé simultanément sur plusieurs tôles après les avoir assemblées.

Un calandrage des nervures 31 peut par exemple être réalisé après séchage, soit pour limiter les défauts de planéité du sommet des nervures, soit pour densifier leur structure et accroître leur conductivité électronique.

De façon générale, la formation des nervures 31 sur une plaque 20 permet d'utiliser une plaque 20 particulièrement fine. Une plaque fine permet à la fois d'accroître la densité de puissance électrique générée pour une masse donnée de la pile à combustible 4 et de réduire le coût de fabrication de la pile à combustible 4. Un rayon de courbure peut être appliqué à la plaque 20 pour disposer d'une pile à combustible 4 de forme non plane. Afin de permettre une flexion et une courbure de la plaque 20, la zone d'impression de la couche d'encre est avantageusement dépourvue de relief.

On distingue principalement trois modes de circulation des réactifs dans les canaux d'écoulement 32 d'une zone réactive:
- les canaux en serpentin: un ou plusieurs canaux parcourent l'ensemble de la zone active en plusieurs allers-retours.
- les canaux parallèles: un faisceau de canaux parallèles et traversants parcourt la zone active de part en part.
- les canaux interdigités: un faisceau de canaux parallèles et bouchés parcourt la zone active de part en part. Chaque canal est bouché soit du côté de l'entrée, soit du côté de la sortie de fluide. Le fluide entrant dans un canal est alors contraint à traverser localement la couche de diffusion gazeuse pour rejoindre un canal adjacent et ensuite atteindre la sortie de fluide de ce canal adjacent.

Les nervures 31 formées délimitent des canaux d'écoulement 32 pour pouvoir former par exemple un des modes de circulation de réactifs cités ci-dessus. Les nervures 31 peuvent également être formées pour délimiter des canaux d'écoulement dans des zones d'homogénéisation.

La formulation de l'encre 30 déposée sur laquelle le cisaillement est appliqué est encore plus avantageusement configurée pour présenter les propriétés suivantes : une viscosité de l'encre comprise entre 200 et 400 Pa.s pour une vitesse de cisaillement de 0,1 s⁻¹, et la viscosité de l'encre étant comprise entre 4,5 et 6 Pa.s pour une vitesse de cisaillement de 100 s⁻¹.

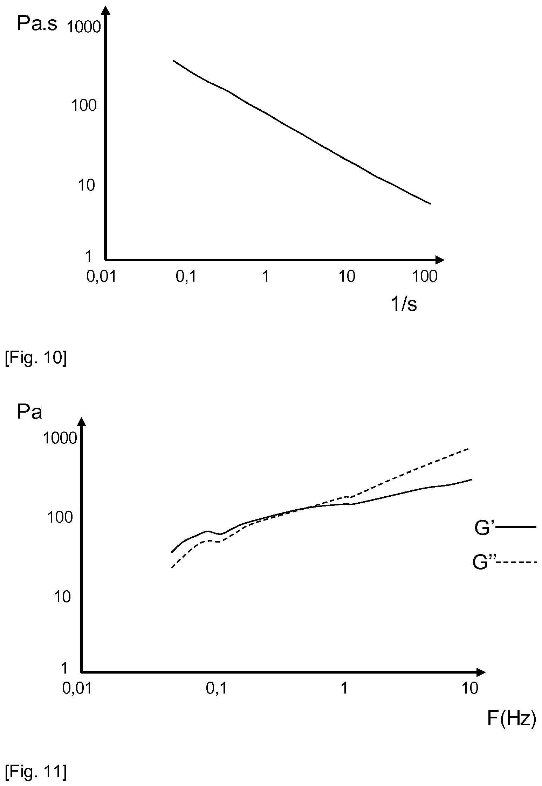

D'autres propriétés de l'encre utilisée peuvent s'avérer avantageuses. Une encre présentant les propriétés suivantes permet notamment de favoriser une bonne fluidité lors de l'application du cisaillement, et une bonne stabilité après la formation du motif de nervures 31. Lors d'un test de l'encre par mesure d'oscillations avec un balayage en fréquence à une amplitude de déformation de 1%, l'encre présente avantageusement un module de conservation G' (ou module élastique selon une appellation courante) supérieur au module de perte G" (ou module visqueux selon l'appellation courante) aux faibles fréquences, typiquement inférieure à 0,1 Hz. Cette propriété indique que l'encre est stable et reste figée au repos et présente donc un risque réduit de sédimentation ou de fluage. Lors du même test de l'encre par mesure d'oscillation, cette encre présente avantageusement un module de conservation G' inférieur au module de perte G" aux fréquences plus élevées, typiquement supérieure à 2 Hz. Le diagramme de la figure 10 illustre les valeurs G' et G" pour une encre présentant un tel comportement, avec la fréquence de déformation en abscisse et la valeur du module en ordonnée. Les valeurs du module de conservation G' et du module de perte G" sont de préférence comprises entre 1 et 200 Pa, plus favorablement comprises entre 10 et 100 Pa, à une fréquence de 0,1 Hz.

L'encre déposée 30, par exemple sous forme de pâte conductrice d'électrons, inclut ici un matériau conducteur, un liant polymère et un solvant. Les proportions en matériau conducteur, liant et solvant permettent d'ajuster la rhéologie de l'encre 30.

Le matériau conducteur de l'encre 30 est par exemple du graphite. L'utilisation de graphite s'avère avantageuse du fait de ses propriétés hydrophobes, adaptées à un fonctionnement en milieu très humide comme celui d'une pile à combustible. L'encre inclut par exemple du graphite à plus de 50% en poids d'extrait sec.

Le graphite inclus dans l'encre 30 à imprimer est par exemple du graphite naturel ou synthétique, du graphite modifié en surface, du graphite de forme sphérique ou de forme patatoïde (ou « flake » en langue anglaise). Le graphite inclus dans l'encre 30 à imprimer présente par exemple une distribution de taille de particules comprise entre 1 et 30 µm pour le D50, et plus favorablement comprise entre 3 et 15 µm pour le D50.

L'encre 30 inclut avantageusement des particules de graphite d'au moins deux tailles différentes, afin d'améliorer la tenue mécanique et la conductivité des nervures 31. Les dispersions géométriques des nervures 31 (et donc des canaux d'écoulement 32) formées sont également réduites.

L'encre 30 inclut avantageusement des particules de graphite ayant un diamètre compris entre 1 et 6µm D50 à une proportion comprise entre 1 et 35 % en poids de l'extrait sec de mélange de graphite (de préférence entre 15 et 27%, avantageusement de 25%), l'encre 30 incluant en outre des particules de graphite ayant un diamètre compris entre 10 et 25 µm D50 à une proportion d'au moins 25 % en poids de l'extrait sec de mélange de graphite.

Le pourcentage d'extrait sec de l'encre 30 est de préférence compris entre 50 et 75%, plus favorablement compris entre 58 et 62%.

L'encre 30 inclut avantageusement une proportion massique de graphite comprise entre 90 et 99% de la masse solide de l'extrait sec, de préférence une proportion massique comprise entre 96 et 98% de l'extrait sec. Avec de telles proportions, on obtient un retrait réduit des nervures 31 au séchage et une excellente stabilité géométrique après impression.

Des additifs peuvent être ajoutés dans l'encre pour améliorer sa conductivité électronique : par exemple des conducteurs électroniques de type noir de carbone, fibres de carbone ou nanotubes de carbone ou bien des fibres métalliques telles que des nanofils d'argent, des nanofils de cuivre, ou des nanofils de tout autre métal conducteur.

Comme liant polymère de l'encre 30, on peut par exemple envisager le polyfluorure de vinylidène (PVdF) ou ses dérivés, le polyacétate de vinyle (PVA), le polyméthacrylate de méthyle (PMMA), le polyoxyéthylène (POE) ou ses dérivés, le polyéthylène téréphtalate (PET), les polyacryliques ou leurs dérivés, les polyimides ou leurs dérivés, les polyétheréthercétones ou leurs dérivés, les polyéthersulfone ou leurs dérivés, les polyoléfines, le polyéthylène, les celluloses telles que, entre autres, la carboxyméthylcellulose ou les fibres de cellulose, les copolymères tels que entre autres le PVdF-HFP (hexafluoropropylène) ou le PVdF-POE, les latex acryliques ou les latex de type SBR (pour stryrene butadiene rubber en langue anglaise pour caoutchouc de styrène-butadiène) ou NBR (pour nitrile butadiene rubber en langue anglaise pour caoutchouc de butadiène nitrure nitryle).

De préférence, le liant polymère de l'encre 30 utilisé est le PVdF. En effet, il est insoluble dans l'eau, ce qui présente un grand intérêt pour le fonctionnement en pile à combustible, dans laquelle l'eau est produite en grande quantité. De plus le PVdF est hydrophobe et contribue donc à l'évacuation de l'eau produite vers l'extérieur de la pile à combustible pour désengorger les canaux d'écoulement de la zone réactive.

Le pourcentage de solvant est de préférence compris entre 30 et 50% de la masse totale de l'encre 30, plus favorablement compris entre 38 et 42% de la masse totale de l'encre 30.

Comme solvant de l'encre, on peut par exemple utiliser du N-méthyl-2-pyrrolidone (NMP) ou ses dérivés, les éthers cycliques tels que le dioxane ou le tétrahydrofurane (THF), le N,N-diméthylformamide (DMF), le N,N-diméthylacétamide (DMAc), le diméthylsulfoxyde (DMSO), le métacrésol, les cétones telles que l'acétone, la méthyléthyl cétone (MEK) ou ses dérivés, l'eau ou les bases aqueuses. De préférence, on utilisera la NMP car c'est un très bon solvant du PVdF.

D'autres additifs peuvent être utilisés pour homogénéiser l'encre, appelée également suspension colloïdale, tels que des tensioactifs, des dispersants ou des agents de défloculation.

La plaque 20 peut par exemple être en métal recouvert de carbone ou en composite chargé de métal. La plaque 20 peut par exemple inclure de l'acier inoxydable, de l'aluminium, ou du titane. Le métal peut par exemple être protégé par un dépôt carboné ou métallisé ou un polymère composite conducteur d'électrons incluant une couche de métallisation, pour protéger la plaque 20 contre la corrosion ou pour diminuer les résistances de contact. La plaque 20 peut être souple ou rigide et avoir de préférence une épaisseur comprise entre 0,01 et 1 mm, plus favorablement compris entre 0,02 et 0,1mm.

Le procédé de fabrication s'avère particulièrement approprié pour la formation de nervures 31 d'une hauteur au moins égale à 120µm, voire d'une hauteur au moins égale à 200µm, voire d'au moins 250µm, en une seule couche d'encre imprimée. La hauteur des nervures 31 formée en une seule couche d'encre imprimée pourra par exemple être comprise entre 140 et 200µm. L'invention s'avère particulièrement avantageuse pour la formation de nervures 31 d'une hauteur au moins égale à la moitié de leur largeur, et encore plus avantageuse lorsque leur hauteur est au moins égale à leur largeur. L'espacement entre les nervures 31, qui définit la largeur des canaux d'écoulement 32, présente par exemple une valeur comprise entre 200 et 400 µm, de préférence entre 250 et 300µm (espacement mesuré à mi-hauteur des nervures 31).

La figure 11 illustre de façon comparative des courbes de polarisation d'une pile à combustible incluant des plaques de guidage d'écoulement réalisées par le procédé de fabrication de l'invention et d'une pile à combustible incluant des plaques de guidage d'écoulement réalisées par usinage d'un bloc de graphite. On constate une très grande similitude de performances entre ces piles à combustible, ce qui montre qu'une plaque de guidage d'écoulement fabriquée par un procédé selon l'invention ne dégrade pas le fonctionnement de la pile à combustible.

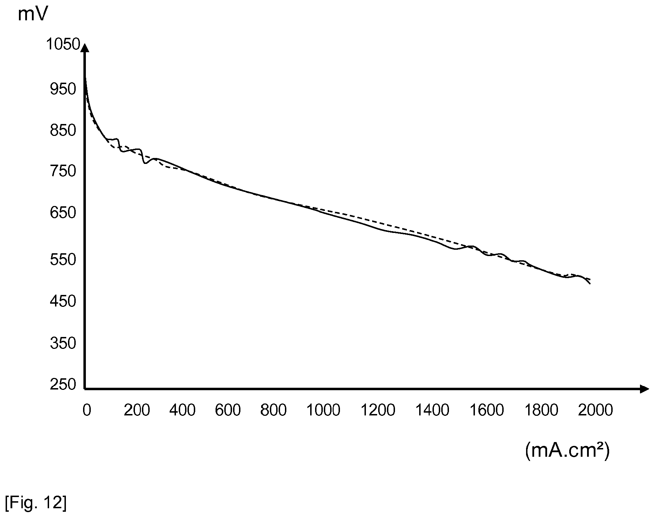

La figure 12 illustre un exemple de profil de nervures 31 et de canaux d'homogénéisation 32, mesuré pour une plaque de guidage d'écoulement 2 réalisée selon un procédé de fabrication de l'invention. Les nervures 31 ainsi obtenues ont une structure assez homogène et présentent des dispersions géométriques réduites entre elles. On peut notamment noter le peu de dispersions entre les hauteurs des différentes nervures 31. Les paramètres du procédé ayant permis la formation de telles nervures sont les suivants : une machine de sérigraphie commercialisée par la société DEK sous la référence model 248 a été utilisée. Une plaque 20 plate en acier inoxydable dorée d'une épaisseur de 0,05 mm d'épaisseur a été utilisée. On a utilisé un écran pochoir de 24 pouces par 24 pouces en acier inoxydable, monté sur une toile aux extrémités d'un cadre. Le motif d'impression est composé d'ouvertures de 0,4mm de large sur 50mm de long, espacées de 0,4mm dans le sens de la largeur. L'écran pochoir utilisé présente une épaisseur de 0,2mm. Le cisaillement a été appliqué à une vitesse de 50mm/s à une force de 4kg. Le motif imprimé a été ensuite séché pendant une heure à une température de 80°C dans une étude ventilée. L'encre utilisée comprend 56,6% en masse d'un mélange de particules de graphite présentant deux diamètres différents (75% du graphite ayant un diamètre de 13 µm D50, 25% du graphite ayant un diamètre de 4 µm D50), 2,4% en masse de PVdF, et 41% en masse de NMP.

Le procédé de fabrication peut être mis en œuvre sur une face opposée de la plaque 20, avec de mêmes paramètres d'encre et d'impression. Les figures 4 à 6 illustrent (vues en coupes schématiques) différentes configurations de plaques de guidage 2, pour lesquelles des nervures ont été formées par impression sur deux faces opposées.

Dans l'exemple de la figure 4, des nervures 31 sont ménagées sur une face supérieure 201 de la plaque 20 et d'autres nervures 31 sont ménagées sur une face inférieure 202 de la plaque 20. Des canaux d'écoulement 32 sont ménagés entre les nervures 31. Dans cet exemple, les nervures 31 des deux faces opposées s'étendent de façon parallèle. Dans cet exemple les nervures des deux faces 201 et 202 présentent de mêmes dimensions et sont superposées : les nervures des deux faces sont le symétrique l'une de l'autre par rapport à la plaque 20.

Dans l'exemple de la figure 5, des nervures 31 sont ménagées sur une face supérieure 201 de la plaque 20 et d'autres nervures 31 sont ménagées sur une face inférieure 202 de la plaque 20. Des canaux d'écoulement 32 sont ménagés entre les nervures 31. Dans cet exemple, les nervures 31 des deux faces opposées s'étendent de façon parallèle, selon une direction longitudinale. Dans cet exemple les nervures des deux faces 201 et 202 présentent de mêmes dimensions et sont décalées selon une direction transversale.

Dans l'exemple de la figure 6, des nervures 31 sont ménagées sur une face supérieure 201 de la plaque 20 et d'autres nervures 33 sont ménagées sur une face inférieure 202 de la plaque 20. Des canaux d'écoulement 32 sont ménagés entre les nervures 31. Des canaux d'écoulement non illustrés sont également ménagés entre les nervures 33. Dans cet exemple, les nervures 31 et les nervures 33 s'étendent selon des directions perpendiculaires.

La figure 7 illustre une plaque bipolaire, formée par la superposition de plaques de guidage d'écoulement obtenues par un procédé de fabrication selon l'invention. Dans cet exemple, trois plaques de guidage d'écoulement sont superposées. Ces trois plaques de guidage d'écoulement comportent des nervures 31 sur une unique face. La plaque de guidage supérieure présente des nervures 31 en saillie depuis sa face supérieure. La plaque de guidage intermédiaire et la plaque de guidage inférieure présentent des nervures 31 en saillie depuis leur face inférieure. Lorsque ces trois plaques de guidage sont superposées, des canaux d'écoulement 32 d'un réactif sont ménagés entre les nervures de la plaque supérieure, des canaux d'écoulement 34 d'un liquide caloporteur sont ménagés entre les nervures de la plaque de guidage intermédiaire, et des canaux d'écoulement 35 d'un autre réactif sont ménagés entre les nervures de la plaque inférieure.

La figure 8 illustre une plaque bipolaire, formée par la superposition de plaques de guidage d'écoulement obtenues par un procédé de fabrication selon l'invention. Dans cet exemple, deux plaques de guidage d'écoulement sont superposées. La plaque de guidage supérieure correspond à la configuration illustrée à la figure 4. Cette plaque de guidage comporte donc des nervures 31 en saillie depuis ses deux faces. La plaque de guidage d'écoulement comporte des nervures 31 en saillie depuis une unique face. La plaque de guidage inférieure présente des nervures 31 en saillie depuis sa face inférieure. Lorsque ces deux plaques de guidage sont superposées, des canaux d'écoulement 32 d'un réactif sont ménagés entre les nervures supérieures de la plaque supérieure, des canaux d'écoulement 34 d'un liquide caloporteur sont ménagés entre les nervures inférieures de cette plaque de guidage supérieure, et des canaux d'écoulement 35 d'un autre réactif sont ménagés entre les nervures de la plaque inférieure.

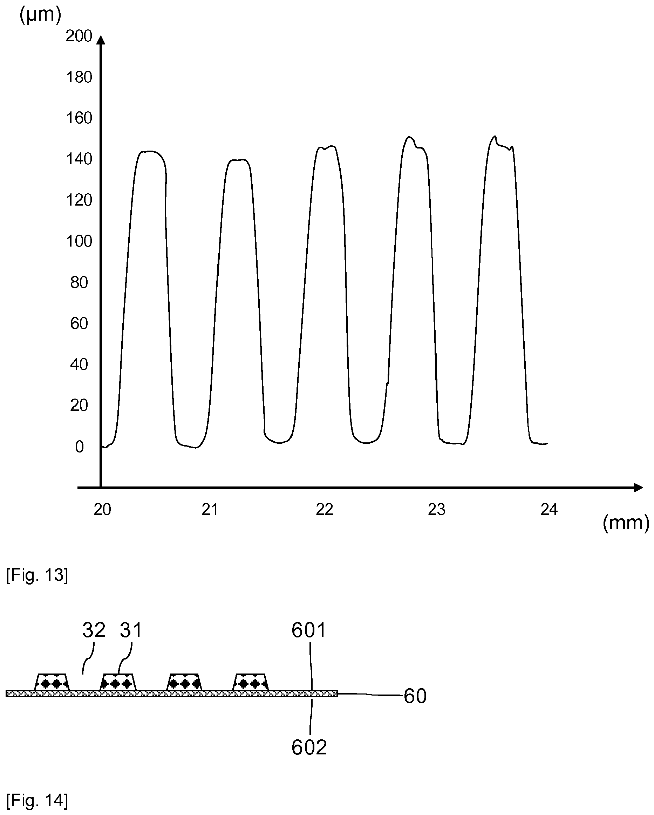

La figure 13 est une vue en coupe schématique d'une plaque de guidage selon un deuxième mode de réalisation de l'invention. Le substrat sur lequel la couche d'encre conductrice est imprimée par sérigraphie est ici une couche de diffusion gazeuse 60. L'encre peut être imprimée sur une face 601 de la couche de diffusion gazeuse 60, avec des paramètres similaires à ceux décrits pour le premier mode de réalisation. L'impression arrive alors à la formation de nervures 31 délimitant des canaux d'écoulement 32 entre elles.

La figure 14 est une vue en coupe schématique d'une telle plaque de guidage, associée à d'autres composants d'un réacteur électrochimique. Une plaque conductrice plane 20, telle que celle détaillée dans le premier mode de réalisation, peut être plaquée contre le sommet des nervures 31. Un assemblage membrane-électrodes, incluant une membrane 113, une anode 111 et une cathode 112, est plaquée contre une face 602 de la couche de diffusion gazeuse.

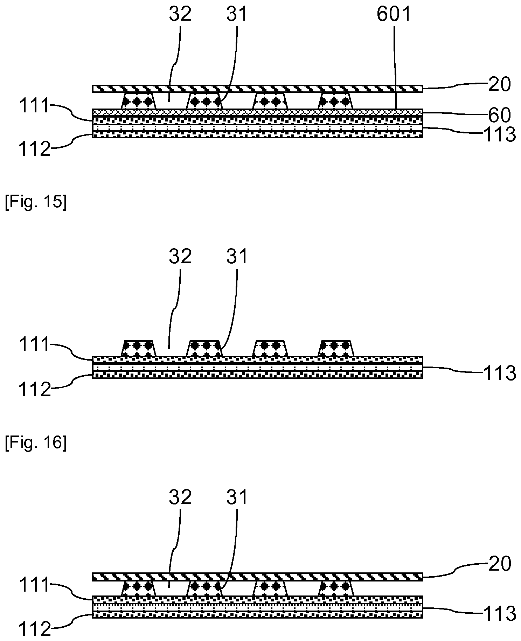

La figure 15 est une vue en coupe schématique d'une plaque de guidage selon un troisième mode de réalisation de l'invention. Le substrat sur lequel la couche d'encre conductrice est imprimée par sérigraphie est ici une électrode 111. L'électrode 111 est en l'occurrence une anode mais l'impression pourrait également être réalisée sur une cathode. Dans cet exemple, l'impression est réalisée sur une électrode 111 solidarisée préalablement à une membrane échangeuse de protons 113 d'un assemblage membrane-électrodes. On pourrait également réaliser l'impression sur une électrode 111 non solidarisée à une membrane. L'encre peut être imprimée sur une face de l'électrode 111, avec des paramètres similaires à ceux décrits pour le premier mode de réalisation. L'impression arrive alors à la formation de nervures 31 délimitant des canaux d'écoulement 32 entre elles.

La figure 16 est une vue en coupe schématique d'une telle plaque de guidage, associée à d'autres composants d'un réacteur électrochimique. Une plaque conductrice plane 20, telle que celle détaillée dans le premier mode de réalisation, peut être plaquée contre le sommet des nervures 31.

## Revendications

1. Procédé de fabrication d'un guide d'écoulement (2) d'un réacteur électrochimique (4), comprenant les étapes de :
- fournir un substrat (20) ;
- sur une première face (201) du substrat (20), imprimer une couche d'encre conductrice électriquement en appliquant une contrainte de cisaillement sur cette couche, la viscosité de l'encre imprimée étant comprise entre 70 et 500 Pa.s pour une vitesse de cisaillement de 0,1 s⁻¹, et la viscosité de l'encre imprimée étant comprise entre 2,5 et 7 Pa.s pour une vitesse de cisaillement de 100 s⁻¹, la couche d'encre étant imprimée pour former un motif incluant des nervures (31) délimitant des canaux d'écoulement (32).

2. Procédé de fabrication selon la revendication 1, dans lequel l'étape d'impression de la couche d'encre sur la première face (201) du substrat (20) est réalisée par sérigraphie.

3. Procédé de fabrication selon la revendication 2, dans lequel ladite étape d'impression par sérigraphie comprend le dépôt de l'encre sur un écran de type pochoir (93) et l'application d'une racle (94) sur l'écran de façon à appliquer un cisaillement sur l'encre pour l'imprimer sur la première face (201) du substrat.

4. Procédé de fabrication selon l'une quelconque des revendications précédentes, comprenant en outre une étape de séchage pour solidifier la couche d'encre du motif formé.

5. Procédé de fabrication selon l'une quelconque des revendications précédentes, dans lequel ladite étape d'impression de la couche d'encre comprend l'application d'une contrainte de cisaillement sur cette couche avec une vitesse de cisaillement compris entre 10 s⁻¹ et 80 s⁻¹.

6. Procédé de fabrication selon l'une quelconque des revendications précédentes, dans lequel ladite couche d'encre imprimée présente une épaisseur au moins égale à 150 µm.

7. Procédé de fabrication selon l'une quelconque des revendications précédentes, dans lequel les nervures formées (31) présentent une hauteur au moins égale à la moitié de leur largeur.

8. Procédé de fabrication selon l'une quelconque des revendications précédentes, dans lequel ladite encre imprimée inclut des particules de graphite selon une proportion comprise entre 90 et 99% de l'extrait sec.

9. Procédé de fabrication selon l'une quelconque des revendications précédentes, dans lequel l'extrait sec représente entre 50 et 75 % en poids de l'encre sur laquelle le cisaillement est appliqué.

10. Procédé de fabrication selon l'une quelconque des revendications précédentes, dans lequel ladite encre inclut des particules ayant un diamètre compris entre 1 et 6µm D50 à une proportion comprise entre 1 et 35 % en poids de l'extrait sec de mélange de graphite, ladite encre incluant en outre des particules ayant un diamètre compris entre 10 et 25 µm D50 à une proportion d'au moins 25 % en poids de l'extrait sec de mélange de graphite.

11. Procédé de fabrication selon l'une quelconque des revendications précédentes, dans lequel ladite encre sur laquelle le cisaillement est appliqué inclut un liant polymère.

12. Procédé de fabrication selon la revendication 11, dans lequel ladite encre sur laquelle le cisaillement est appliqué inclut du polyfluorure de vinylidène.

13. Procédé de fabrication selon l'une quelconque des revendications précédentes, dans lequel l'encre sur laquelle le cisaillement est appliqué présente un module de conservation supérieur au module visqueux pour une amplitude de déformation de 1% à une fréquence inférieure à 0,1Hz,

14. Procédé de fabrication selon l'une quelconque des revendications précédentes, dans lequel l'encre sur laquelle le cisaillement est appliqué présente un module de conservation inférieur au module visqueux pour une amplitude de déformation de 1% à une fréquence supérieure à 2Hz.

15. Procédé de fabrication selon l'une quelconque des revendications précédentes, dans lequel ledit substrat (20) fourni est exempt de relief au niveau de l'encre imprimée.

16. Procédé de fabrication selon l'une quelconque des revendications précédentes, dans lequel ledit substrat fourni est une plaque conductrice électriquement, une couche de diffusion gazeuse ou une couche d'électrode.

17. Procédé de fabrication d'une plaque bipolaire, comprenant la fabrication de premier à troisième guides d'écoulement par un procédé de fabrication selon l'une quelconque des revendications précédentes, ledit substrat fourni étant une plaque conductrice électriquement pour chacun des premier à troisième guides d'écoulement, une couche d'encre conductrice électriquement étant imprimée seulement sur la première face des premier à troisièmes guides d'écoulement, une plaque bipolaire étant formée en accolant des deuxièmes faces des premier et deuxièmes guides d'écoulement et en accolant les nervures du motif formé sur le deuxième guide d'écoulement contre une deuxième face du troisième guide d'écoulement, de façon à délimiter des canaux d'écoulement entre les deuxième et troisième guides d'écoulement.

18. Procédé de fabrication d'un guide d'écoulement selon l'une quelconque des revendications 1 à 16, dans lequel ledit substrat fourni est une plaque conductrice électriquement, et dans lequel on imprime une couche d'encre conductrice électriquement en appliquant un cisaillement de cette couche sur une deuxième face de ladite plaque conductrice, la viscosité de l'encre imprimée étant comprise entre 70 et 500 Pa.s pour une vitesse de cisaillement de 0,1 s⁻¹, et la viscosité de l'encre imprimée étant comprise entre 2,5 et 7 Pa.s pour une vitesse de cisaillement de 100 s⁻¹, la couche d'encre étant imprimée pour former un motif incluant des nervures délimitant des canaux d'écoulement.

19. Procédé de fabrication d'une plaque bipolaire, comprenant la fabrication d'un guide d'écoulement par un procédé de fabrication selon la revendication 18, et comprenant l'application d'une face d'une autre plaque conductrice électriquement contre des nervures d'un motif formées sur le support du guide d'écoulement.

20. Procédé de fabrication d'une pile à combustible, comprenant :
- la formation d'un premier guide d'écoulement par un procédé de fabrication selon l'une quelconque des revendications 1 à 16 ou 18, dans lequel le substrat du premier guide est une première plaque conductrice électriquement ;
- la formation d'un deuxième guide d'écoulement par un procédé de fabrication selon l'une quelconque des revendications 1 à 16 ou 18, dans lequel le substrat du deuxième guide est une deuxième plaque conductrice électriquement ;
- le placement d'un assemblage membrane/électrodes entre lesdites première et deuxième plaques, les nervures respectives des motifs formés sur les première et deuxième plaques d'écoulement étant orientées vers l'assemblage membrane/électrodes.

21. Procédé de fabrication d'un guide d'écoulement selon l'une quelconque des revendications 1 à 16 ou 18, dans lequel chacune desdites nervures des motifs formés est constituée d'une unique couche d'encre imprimée.

22. Plaque de guidage d'écoulement (2) pour réacteur électrochimique, **caractérisée en ce qu'**elle est fabriquée par un procédé selon l'une quelconque des revendications 1 à 16 ou 18 ou 21.

## Patentansprüche

1. Verfahren zur Herstellung einer Strömungsführung (2) eines elektrochemischen Reaktors (4), das die folgenden Schritte beinhaltet:
- Bereitstellen eines Substrats (20);
- auf einer ersten Seite (201) des Substrats (20), Aufdrucken einer elektrisch leitfähigen Tintenschicht, indem eine Schubspannung auf diese Schicht aufgebracht wird, wobei die Viskosität der aufgedruckten Tinte bei einer Schergeschwindigkeit von 0,1 s⁻¹ zwischen 70 und 500 Pa.s liegt und die Viskosität der aufgedruckten Tinte bei einer Schergeschwindigkeit von 100 s⁻¹ zwischen 2,5 und 7 Pa.s liegt, wobei die Tintenschicht aufgedruckt wird, um ein Muster zu bilden, das Rippen (31) umfasst, die Strömungskanäle (32) abgrenzen.

2. Herstellungsverfahren nach Anspruch 1, wobei der Schritt des Aufdruckens der Tintenschicht auf die erste Seite (201) des Substrats (20) mittels Siebdruck erfolgt.

3. Herstellungsverfahren nach Anspruch 2, wobei der Schritt des Aufdruckens mittels Siebdruck das Auftragen der Tinte auf eine Abdeckung vom Typ Schablone (93) und das Anwenden einer Rakel (94) auf die Abdeckung beinhaltet, um eine Scherung auf die Tinte aufzubringen, um diese auf die erste Seite (201) des Substrats aufzudrucken.

4. Herstellungsverfahren nach einem der vorhergehenden Ansprüche, das ferner einen Trocknungsschritt zum Verfestigen der Tintenschicht des gebildeten Musters beinhaltet.

5. Herstellungsverfahren nach einem der vorhergehenden Ansprüche, wobei der Schritt des Aufdruckens der Tintenschicht das Aufbringen einer Schubspannung auf diese Schicht mit einer Schergeschwindigkeit zwischen 10 s⁻¹ und 80 s⁻¹ beinhaltet.

6. Herstellungsverfahren nach einem der vorhergehenden Ansprüche, wobei die aufgedruckte Tintenschicht eine Dicke von mindestens 150 µm aufweist.

7. Herstellungsverfahren nach einem der vorhergehenden Ansprüche, wobei die gebildeten Rippen (31) eine Höhe aufweisen, die mindestens gleich der Hälfte ihrer Breite ist.

8. Herstellungsverfahren nach einem der vorhergehenden Ansprüche, wobei die aufgedruckte Tinte Graphitpartikel entsprechend einem Anteil zwischen 90 und 99 % der Trockenmasse umfasst.

9. Herstellungsverfahren nach einem der vorhergehenden Ansprüche, wobei die Trockenmasse zwischen 50 und 75 Gew.-% der Tinte darstellt, auf die die Scherung aufgebracht wird.

10. Herstellungsverfahren nach einem der vorhergehenden Ansprüche, wobei die Tinte Partikel, die einen Durchmesser zwischen 1 und 6 µm D50 aufweisen, mit einem Anteil zwischen 1 und 35 Gew.-% der Trockenmasse einer Graphitmischung umfasst, wobei die Tinte ferner Partikel, die einen Durchmesser zwischen 10 und 25 µm D50 aufweisen, mit einem Anteil von mindestens 25 Gew.-% der Trockenmasse einer Graphitmischung umfasst.

11. Herstellungsverfahren nach einem der vorhergehenden Ansprüche, wobei die Tinte, auf die die Scherung aufgebracht wird, ein polymeres Bindemittel umfasst.

12. Herstellungsverfahren nach Anspruch 11, wobei die Tinte, auf die die Scherung aufgebracht wird, Polyvinylidenfluorid umfasst.

13. Herstellungsverfahren nach einem der vorhergehenden Ansprüche, wobei die Tinte, auf die die Scherung aufgebracht wird, einen Speichermodul aufweist, der bei einer Verformungsamplitude von 1 % mit einer Frequenz kleiner als 0,1 Hz größer als der Viskositätsmodul ist.

14. Herstellungsverfahren nach einem der vorhergehenden Ansprüche, wobei die Tinte, auf die die Scherung aufgebracht wird, einen Speichermodul aufweist, der bei einer Verformungsamplitude von 1 % mit einer Frequenz größer als 2 Hz kleiner als der Viskositätsmodul ist.

15. Herstellungsverfahren nach einem der vorhergehenden Ansprüche, wobei das bereitgestellte Substrat (20) im Bereich der aufgedruckten Tinte kein Relief aufweist.

16. Herstellungsverfahren nach einem der vorhergehenden Ansprüche, wobei das bereitgestellte Substrat eine elektrisch leitfähige Platte, eine Gasdiffusionsschicht oder eine Elektrodenschicht ist.

17. Verfahren zur Herstellung einer bipolaren Platte, beinhaltend die Herstellung einer ersten bis dritten Strömungsführung durch ein Herstellungsverfahren nach einem der vorhergehenden Ansprüche, wobei das bereitgestellte Substrat eine elektrisch leitfähige Platte für jede der ersten bis dritten Strömungsführung ist, wobei eine elektrisch leitfähige Tintenschicht nur auf die erste Seite der ersten bis dritten Strömungsführung aufgedruckt wird, wobei eine bipolare Platte gebildet wird, indem zweite Seiten der ersten und zweiten Strömungsführung aneinandergelegt werden und indem die Rippen des auf der zweiten Strömungsführung gebildeten Musters an eine zweite Seite der dritten Strömungsführung angelegt werden, sodass zwischen der zweiten und dritten Strömungsführung Strömungskanäle abgegrenzt werden.

18. Verfahren zur Herstellung einer Strömungsführung nach einem der Ansprüche 1 bis 16, wobei das bereitgestellte Substrat eine elektrisch leitfähige Platte ist und wobei eine elektrisch leitfähige Tintenschicht aufgedruckt wird, indem eine Scherung dieser Schicht auf eine zweite Seite der leitfähigen Platte aufgebracht wird, wobei die Viskosität der aufgedruckten Tinte bei einer Schergeschwindigkeit von 0,1 s⁻¹ zwischen 70 und 500 Pa.s liegt und die Viskosität der aufgedruckten Tinte bei einer Schergeschwindigkeit von 100 s⁻¹ zwischen 2,5 und 7 Pa.s liegt, wobei die Tintenschicht aufgedruckt wird, um ein Muster zu bilden, das Rippen umfasst, die Strömungskanäle abgrenzen.

19. Verfahren zur Herstellung einer bipolaren Platte, beinhaltend die Herstellung einer Strömungsführung durch ein Herstellungsverfahren nach Anspruch 18 und beinhaltend das Anlegen einer Seite einer anderen elektrisch leitfähigen Platte an Rippen eines Musters, die auf dem Träger der Strömungsführung gebildet sind.

20. Verfahren zur Herstellung einer Brennstoffzelle, das Folgendes beinhaltet:
- Bilden einer ersten Strömungsführung durch ein Herstellungsverfahren nach einem der Ansprüche 1 bis 16 oder 18, wobei das Substrat der ersten Führung eine erste elektrisch leitfähige Platte ist;
- Bilden einer zweiten Strömungsführung durch ein Herstellungsverfahren nach einem der Ansprüche 1 bis 16 oder 18, wobei das Substrat der zweiten Führung eine zweite elektrisch leitfähige Platte ist;
- Einfügen einer Membran-Elektroden-Einheit zwischen die erste und die zweite Platte, wobei die jeweiligen Rippen der auf der ersten und der zweiten Strömungsplatte gebildeten Muster zu der Membran-Elektroden-Einheit hin ausgerichtet sind.

21. Verfahren zur Herstellung einer Strömungsführung nach einem der Ansprüche 1 bis 16 oder 18, wobei jede der Rippen der gebildeten Muster aus einer einzigen aufgedruckten Tintenschicht besteht.

22. Strömungsführungsplatte (2) für einen elektrochemischen Reaktor, **dadurch gekennzeichnet, dass** sie durch ein Verfahren nach einem der Ansprüche 1 bis 16 oder 18 oder 21 hergestellt ist.

## Claims

1. Process for manufacturing a flow guide (2) for an electrochemical reactor (4), comprising the steps of:
- providing a substrate (20);
- on a first face (201) of the substrate (20), printing a layer of electrically conductive ink by applying a shear stress to this layer, the viscosity of the printed ink being comprised between 70 and 500 Pa.s for a shear rate of 0.1 s⁻¹, and the viscosity of the printed ink being comprised between 2.5 and 7 Pa.s for a shear rate of 100 s⁻¹, the layer of ink being printed to form a pattern including ribs (31) delineating flow channels (32).

2. Manufacturing process according to Claim 1, wherein the step of printing the layer of ink on the first face (201) of the substrate (20) is a screen-printing step.

3. Manufacturing process according to Claim 2, wherein said screen-printing step comprises depositing the ink on a stencil screen (93) and applying a squeegee (94) to the screen so as to apply a shear to the ink in order to print it onto the first face (201) of the substrate.

4. Manufacturing process according to any one of the preceding claims, furthermore comprising a drying step in order to solidify the layer of ink of the formed pattern.

5. Manufacturing process according to any one of the preceding claims, wherein said step of printing the layer of ink comprises applying a shear stress to this layer with a shear rate comprised between 10 s⁻¹ and 80 s⁻¹.

6. Manufacturing process according to any one of the preceding claims, wherein said printed layer of ink has a thickness at least equal to 150 µm.

7. Manufacturing process according to any one of the preceding claims, wherein the formed ribs (31) have a height at least equal to half their width.

8. Manufacturing process according to any one of the preceding claims, wherein the solid content of said printed ink includes graphite particles in a proportion comprised between 90 and 99%.

9. Manufacturing process according to any one of the preceding claims, wherein the solid content represents between 50 and 75% by weight of the ink to which the shear is applied.

10. Manufacturing process according to any one of the preceding claims, wherein the solid graphite-mixture content of said ink includes particles having a D50 diameter comprised between 1 and 6 µm in a proportion comprised between 1 and 35% by weight, the solid graphite-mixture content of said ink furthermore including particles having a D50 diameter comprised between 10 and 25 µm in a proportion of at least 25% by weight.

11. Manufacturing process according to any one of the preceding claims, wherein said ink to which the shear is applied includes a polymer binder.

12. Manufacturing process according to Claim 11, wherein said ink to which the shear is applied includes polyvinylidene fluoride.

13. Manufacturing process according to any one of the preceding claims, wherein the ink to which the shear is applied has a storage modulus higher than the viscous modulus for a deformation amplitude of 1% at a frequency lower than 0.1 Hz.

14. Manufacturing process according to any one of the preceding claims, wherein the ink to which the shear is applied has a storage modulus lower than the viscous modulus for a deformation amplitude of 1% at a frequency higher than 2 Hz.

15. Manufacturing process according to any one of the preceding claims, wherein said provided substrate (20) is exempt of relief level with the printed ink.

16. Manufacturing process according to any one of the preceding claims, wherein said provided substrate is an electrically conductive plate, a gas diffusion layer or an electrode layer.

17. Process for manufacturing a bipolar plate, comprising manufacturing first to third flow guides using a manufacturing process according to any one of the preceding claims, said provided substrate being an electrically conductive plate for each of the first to third flow guides, a layer of electrically conductive ink being printed only on the first face of the first to third flow guides, a bipolar plate being formed by bonding second faces of the first and second flow guides and by bonding the ribs of the pattern formed on the second flow guide against a second face of the third flow guide, so as to delineate flow channels between the second and third flow guides.

18. Process for manufacturing a flow guide according to any one of Claims 1 to 16, wherein said provided substrate is an electrically conductive plate, and wherein a layer of electrically conductive ink is printed by applying a shear to this layer on a second face of said conductive plate, the viscosity of the printed ink being comprised between 70 and 500 Pa.s for a shear rate of 0.1 s⁻¹, and the viscosity of the printed ink being comprised between 2.5 and 7 Pa.s for a shear rate of 100 s⁻¹, the layer of ink being printed in order to form a pattern including ribs delineating flow channels.

19. Process for manufacturing a bipolar plate, comprising manufacturing a flow guide using a manufacturing process according to Claim 18, and comprising applying a face of another electrically conductive plate against ribs of a pattern, which ribs are formed on the carrier of the flow guide.

20. Process for manufacturing a fuel-cell stack, comprising:
- forming a first flow guide using a manufacturing process according to any one of Claims 1 to 16 or 18, wherein the substrate of the first guide is a first electrically conductive plate;
- forming a second flow guide using a manufacturing process according to any one of Claims 1 to 16 or 18, wherein the substrate of the second guide is a second electrically conductive plate;
- placing a membrane/electrode assembly between said first and second plates, the respective ribs of the patterns formed on the first and second flow plates being oriented toward the membrane/electrode assembly.

21. Process for manufacturing a flow guide according to any one of Claims 1 to 16 or 18, wherein each of said ribs of the formed patterns consists of a single printed layer of ink.

22. Flow-guiding electrochemical-reactor plate (2), **characterized in that** it is manufactured using a process according to any one of Claims 1 to 16 or 18 or 21.
